(19) Europäisches Patentamt
European Patent Office
Office européen des brevets

(11) **EP 2 302 933 A1**

(12) **EUROPEAN PATENT APPLICATION**

(43) Date of publication:
**30.03.2011 Bulletin 2011/13**

(51) Int Cl.:
***H04N 7/26*** (2006.01)

(21) Application number: **09170576.4**

(22) Date of filing: **17.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **Mitsubishi Electric R&D Centre Europe B.V.**
  **20 Frederick Sanger Road**
  **The Surrey Research Park**
  **Guildford, Surrey GU2 7YD (GB)**
  Designated Contracting States:
  **GB**
• **Mitsubishi Electric Corporation**
  **Chiyoda-ku**
  **Tokyo 100-8310 (JP)**
  Designated Contracting States:
  **AT BE BG CH CY CZ DE DK EE ES FI FR GR HR HU IE IS IT LI LT LU LV MC MK MT NL NO PL PT RO SE SI SK SM TR**

(72) Inventors:
• **Sprljan, Nikola**
  **Guildford, Surrey GU1 3LL (GB)**
• **Cieplinski, Leszek**
  **Guildford, Surrey GU1 2UF (GB)**

(74) Representative: **HOFFMANN EITLE**
**Patent- und Rechtsanwälte**
**Arabellastraße 4**
**81925 München (DE)**

Remarks:
Amended claims in accordance with Rule 137(2) EPC.

(54) **Weighted motion compensation of video**

(57) A video decoder is disclosed that is operable to decode predictively encoded data wherein each encoded data segment has been encoded with a local weighting parameter. When encoding each segment of a picture, a weighting parameter is derived from a previously encoded segment of the picture. Advantageously, by allowing for different weighting parameters for each segment, the illumination changes within the picture are adapted to better than if a single global weighting parameter is used for all of the segments of a picture. Applications include MPEG video encoding and decoding. Accordingly, there is provided a video decoder operable to decode predictively-encoded video data defining a sequence of pictures, each picture divided into a plurality of segments, the decoder comprising a decoder operable to decode the encoded video data to generate decoded difference data (MBr') for a segment of a picture, motion data (14) for the segment and at least one weighting parameter for the segment; a motion-compensated-data generator operable to process the motion data and previously decoded video data to generate motion-compensated video data (MBc') for the segment; a predicted-data generator operable to generate predicted video data (MBp) for the segment by combining the motion-compensated video data (MBc') for the segment with at least one weighting parameter for the segment that is different from a weighting parameter used for a different segment in the same picture; and a data combiner operable to combine the decoded difference data (MBr') for the segment with the predicted video data (MBp) for the segment.

**(Cont. next page)**

EP 2 302 933 A1

**Figure 1**

**Description**

**Field of the Invention**

The present invention relates to video encoding and decoding.

**Background**

Most modem video compression methods are based on spatio-temporal prediction of pictures, which essentially consists of encoding the difference between the prediction signal and the predicted picture. Generally, the closer in the appropriate metric the prediction signal is to the predicted picture, the better that picture can be compressed, i.e. it can be represented with fewer bits. The prediction is formed by taking decoded samples of previously encoded pictures, or previously encoded blocks of the current picture. Temporal prediction is the critical gain factor in the overall compression efficiency, since typical video signals exhibit significant temporal correlation. Besides compensating for spatial displacement between parts of different pictures by means of motion vectors, by using weighting prediction the changes in luminance levels can be also compensated for. Another prominent technique in encoding is the Rate Distortion Optimisation (RDO), which is widely used to assist in the video coding mode selection for achieving the best possible coding efficiency gain. This process can be described as follows: for a valid coding mode, the bits consumption is obtained and the distortion between the original video data and decoded video data is measured. A cost function $J$ is constructed by using a Lagrange multiplier $\lambda$ to balance the rate $R$ and the distortion $D$:

$$J = D + \lambda R \qquad \qquad \dots (1)$$

According to the smallest cost value a video encoding mode will be decided for achieving the best possible coding efficiency gain. The RDO process is important for capturing the video coding efficiency gain if several coding modes are possible for given video data.

H.264 / MPEG-4 AVC video coding standard has adopted weighted prediction, where arbitrary multiplicative weighting factors and additive offset factors can be applied to the reference picture predictions. Weighted prediction can generally be represented with the following relation:

$$\mathbf{Y} = o + w\mathbf{X}, \qquad \qquad \dots (2)$$

where X is a reference picture signal, **Y** is the predicted image signal, $o$ is an additive offset weighting parameter and $w$ is a multiplicative weight weighting parameter. A separate offset/weight pair can be assigned to each of the reference picture signals used to predict the current picture. In H.264 / MPEG-4 AVC at most two pictures are used for temporal compensation for any given macroblock. In P pictures only a single prediction originating from a single picture is used, while in B pictures two prediction signals can be used. In the explicit mode, weight and offset are specified at the slice level and their derivation is not defined by the standard. In the implicit mode the weights are computed according to the distance to the referenced pictures, where the relationship between the picture distances and the applied weights are defined by the standard. The standard leaves a provision for applying different explicit weighting parameters for different segments of a slice, down to the size of a macroblock, in a form of memory management control operations (MMCO). This is explained, for example, in US2006/0198440 A1. However, this comes with a considerable penalty in overhead information for weighted prediction parameter sets large enough to be of practical use.

Furthermore, the derivation of the picture-level weighted prediction parameters normally entails some multipass scheme, where picture data has to be processed at least twice. One possibility is just to estimate the parameters, for which the whole picture statistics need to be captured before the actual compression, in order to compute the optimal weighting parameters using some criteria related to the expected compression performance. Since in practice the compression performance utilising picture level weighted prediction cannot be estimated reliably without actually compressing the data, a scheme known as "Picture Level Rate-Distortion Optimisation" can be employed, in which the picture is compressed multiple times, each time with different weighted prediction parameters, including a mode where weighted prediction is disabled, and the best outcome in terms of Lagrangian cost is preserved. This has the disadvantage of very high computational complexity while providing only limited performance improvement.

Since the derivation of the explicit weighting parameters is not defined by the standard, various schemes exist.

In WO2007/092215 A2 the following derivation methods are discussed: offset only by subtracting means of two pictures, weight only by dividing means of two pictures, histogram based and linear regression based methods, and also iterative variations of all previous methods, where the parameters are adjusted after motion compensation. The heuristic based methods in WO2007/092215 A2 compute several pairs of parameters, each by using a different derivation method, and then by using a particular metric decide which one would perform the best.

A number of problems exist with the known techniques, however. In particular, due to the global nature of the weighting prediction parameters, the outcome of known weighted prediction techniques is generally unreliable in terms of the coding efficiency. If a multipass picture level optimisation approach is not used, the coding performance may even become worse. The multipass approach guarantees improvement, but in many cases it is still quite small and comes at the cost of very high computational complexity.

**Summary of the Invention**

In general, to adapt to the illumination changes within a picture, the operation of weighted prediction in an embodiment of the present invention is defined at the local level, where for each picture segment a different set of weighting parameters is defined and sent in the part of the bit-stream that conveys parameters for the current block. The operation of weighted prediction can be defined with:

$$\mathbf{Bp} = o + w_0 \mathbf{Bc}_0 + \ldots + w_n \mathbf{Bc}_n + \ldots + w_N \mathbf{Bc}_N \qquad \ldots (3)$$

where $\mathbf{Bc}_n$ is the $n$+1-st picture segment, $o$ is an additive offset weighting parameter and $w_n$ is a multiplicative weight weighting parameter associated with the picture segment $\mathbf{Bc}_n$. Reference picture $\mathbf{Bp}$ is the prediction signal used to predict the currently encoded picture segment. The picture segment $\mathbf{Bc}_n$ may be associated with the $n$+1-st reference picture, but in a general case it can be any previously processed picture segment. Furthermore, it can be a resampled (e.g. by means of interpolation) picture segment. The aforementioned picture segments can be of arbitrary shape.

As a result of these features, the weighting parameters are adapted to local variations in content, thereby improving prediction.

More particularly, according to the present invention, there is provided a video decoding method of decoding predictively-encoded video data defining a sequence of pictures, each picture divided into a plurality of segments, the method comprising:

decoding the encoded video data to generate decoded difference data for a segment of a picture, motion data for the segment and at least one weighting parameter for the segment;

processing the motion data and previously decoded video data to generate motion-compensated video data for the segment;

generating predicted video data for the segment by combining the motion-compensated video data for the segment with at least one weighting parameter for the segment that is different from a weighting parameter used for a different segment in the same picture; and

combining the decoded difference data for the segment with the predicted video data for the segment.

The at least one weighting parameter may comprise an additive offset weighting parameter or a multiplicative weight weighting parameter, or both.

In the video decoding method:

the encoded video data may be decoded to generate a plurality of weighting parameters for the segment;

the motion data and previously decoded video data for a plurality of segments may be processed to generate respective motion-compensated video data for each of the plurality of segments; and

the motion-compensated video data for each of the plurality of segments may be combined with a respective one of the weighting parameters to generate the predicted video data.

The motion data and previously decoded video data for a plurality of segments in different respective pictures may be processed to generate the respective motion-compensated video data for each of the plurality of segments.

In the video decoding method:

the decoding process may decode the encoded video data to generate difference data for the at least one weighting parameter; and

the predicted video data for the segment may be generated by deriving at least one weighting parameter for the segment using the decoded difference data for the at least one weighting parameter and at least one previously decoded weighting parameter derived for a previously decoded segment.

The predicted video data for the segment may be generated by:

predicting at least one weighting parameter for the segment from a weighting parameter of at least one neighbouring segment that has been previously decoded;

combining the at least one predicted weighting parameter with the at least one weighting parameter obtained from the decoding process to generate at least one resultant predicted weighting parameter; and

combining the motion-compensated video data for the segment with the at least one resultant predicted weighting parameter to generate the predicted video data for the segment.

The at least one weighting parameter for the segment may be predicted by calculating an average of the weighting parameters of at least two neighbouring segments that have been previously decoded.

In the video decoding method, the process of generating predicted video data may comprise:

comparing the motion data for the segment with the motion data for at least one previously decoded segment to determine a measure of the similarity therebetween; and

if the determined measure indicates a high similarity, using a weighting parameter for the at least one previously decoded segment to generate a predicted weighting parameter for the segment and combining the motion-compensated video data with the predicted weighting parameter.

In the video decoding method, the encoded video data may be decoded to generate an offset weighting parameter and a weight weighting parameter such that the value of the offset weighting parameter is represented with fewer bits the closer the value is to zero and the value of the weight weighting parameter is represented with fewer bits the closer the value is to one.

The present invention also provides a video encoding method of predictively encoding video data defining a sequence of pictures, each picture divided into a plurality of segments, the method comprising:

processing video data for a segment to generate motion data for the segment and motion-compensated video data;

calculating at least one weighting parameter for the segment that is different from a weighting parameter used for a different segment in the same picture;

combining the motion-compensated video data and the at least one weighting parameter to generate weighted-motion-compensated-data for the segment;

generating difference data defining the difference between the video data for the segment and the weighted-motion-compensated-data for the segment; and

encoding data for the segment comprising the difference data for the segment, the motion data for the segment, and the at least one weighting parameter for the segment.

In the video encoding method:

a plurality of weighting parameters may be calculated for the segment;

the video data for the segment and a plurality of different segments may be processed to generate a plurality of respective motion-compensated video data segments;

the weighted-motion-compensated-data may be generated by combining the plurality of motion-compensated video data segments and the plurality of weighting parameters such that each respective one of the plurality of motion-compensated video data segments is weighted by a respective one of the plurality of weighting parameters.

The video data for the segment and a plurality of segments in different respective pictures may be processed to generate the plurality of respective motion-compensated video data segments.

The video encoding method may further comprise calculating, for each weighting parameter for the segment, a weighting parameter difference value for the segment comprising a difference between the weighting parameter for the segment and the weighting parameter for a previous segment; and the encoding process may comprise encoding the difference data for the segment, the motion data for the segment, and the weighting parameter difference value(s) for the segment.

The difference value for the segment may be generated by:

predicting at least one predicted weighting parameter for the segment from a weight parameter of at least one previous neighbouring segment; and

calculating a difference between the at least one weighting parameter calculated by the weighting parameter calculator and the at least one predicted weighting parameter.

The weighting parameter may comprise an offset (o) and a weight (w), and an offset value and a weight value may be calculated which minimise the cost function J(o,w):

$$J(o,w) = D(o,w) + \lambda R(o,w)$$

where o is the offset, w is the weight, D is a distortion measure comprising a difference between the weighted-motion-compensated-data (MBp) for the segment and the video data (MB) for the segment, R is a measure of encoded data rate and $\lambda$ is a Lagrangian multiplier by:

a) calculating a line in offset-weight space defining pairs of offset-weight values which represent a minimum of the distortion measure D;

b) selecting one of the offset and the weight as a first search parameter and the other as a second search parameter;

c) selecting a global range of the first search parameter;

d) selecting a value of the first search parameter from the selected global range;

e) selecting a local search range for the second search parameter;

f) for the selected constant value of the first search parameter, searching in the vicinity of the line within the local search range to identify therein the value of the second search parameter which gives a minimum value of J(o,w);

g) repeating process d) to f) for different constant values of the first search parameter to find the combination of offset and weight values which give an overall minimum value of J(o,w).

Process f) above may be performed such that continuously increasing or continuously decreasing values of the first search parameter within the local search range are tested while:

$$\Delta D < -\lambda \cdot \Delta R$$

where $\Delta D$ is the change in distortion measure and $\Delta R$ is the change in rate measure.

The present invention further provides a computer program product, comprising a storage medium or a signal, carrying computer program instructions to program a programmable processing apparatus to become operable to perform a video decoding method or a video encoding method as set out above.

The present invention further provides apparatus for performing the video decoding method set out above, and also apparatus for performing the video encoding method set out above.

**Brief Description of the Drawings**

Embodiments of the present invention will now be described, by way of example only, with reference to the accompanying drawings, in which:

Figure 1 is a block diagram of a video decoder in an embodiment;

Figure 2 is a block diagram of a video encoder in an embodiment;

Figure 3 is an example for a block being matched and a candidate block in motion estimation;

Figure 4 is an example of the distortion function D(o,w) plotted for ($o_{qi}$, $w_{qi}$) in the range - 10, ...,10, respectively;

Figure 5 is an example plot of the rate part of the Lagrangian cost;

Figure 6 is a plot of the overall Lagrangian cost (distortion and rate combined);

Figure 7 shows two examples of local search for global minimum of the Lagrangian; and

Figure 8 is a flowchart showing the processing operations performed by the encoder in an embodiment to calculate weighting parameters.

**Embodiments of the Invention**

In the preferred embodiment a picture segment on which the weighted prediction operates is the macroblock as defined in H.264 / MPEG-4 AVC. In that context the approach described herein is referred to as MBWP (MacroBlock Weighted Prediction). For the sake of simpler notation, MBWP is only presented here for the unidirectional prediction case (e.g. P pictures in H.264 / MPEG-4 AVC), with generalisation considerations to multireference pictures discussed where required. In that case MBWP can be defined with:

$$\mathbf{MBp} = o + w\mathbf{MBc'} \qquad \ldots (4)$$

where **MBc'** is a decoded macroblock, obtained by means of interpolation in the case of sub-pel precision motion vectors or directly from the previously decoded pictures, *o* is an additive offset weighting parameter and *w* is a multiplicative weight weighting parameter (referred to hereinafter merely as an offset and a weight, respectively, with the term "weighting parameter" covering both). **MBp** is the resulting prediction signal, used to predict the current macroblock.

In an alternative embodiment, the process of weighting is adapted within the macroblock for smaller blocks (e.g. those specified by H.264 / MPEG-4 AVC standard) or for each pixel:

$$\mathbf{MBp}(n) = f_o(o,n) + f_w(w,n) \cdot \mathbf{MBc'}(n) \qquad \ldots (5)$$

where *n* is the index of the currently processed pixel, functions $f_o(\ )$ and $f_w(\ )$ determine the current offset and weight, respectively, and are dependent on the already processed data (already encoded in the encoder, or already decoded in the decoder). For instance, these can be the values of the previously processed predicted signal samples **MBc'**(0),..., **MBc'**(*n* - 1), previously obtained samples of the predicted signal **MBp**(0),...,**MBp'**(*n* - 1), etc. In one particular example, this function can perform adaptive rounding of the result given by weighted prediction, as the application of multiplicative weight in general yields a non-integer value.

The prediction signal is added to the decoded difference signal **MBr'** and the current macroblock **MB'** is then reconstructed as:

$$MB' = MBp + MBr' \qquad \ldots (6)$$

**Decoder**

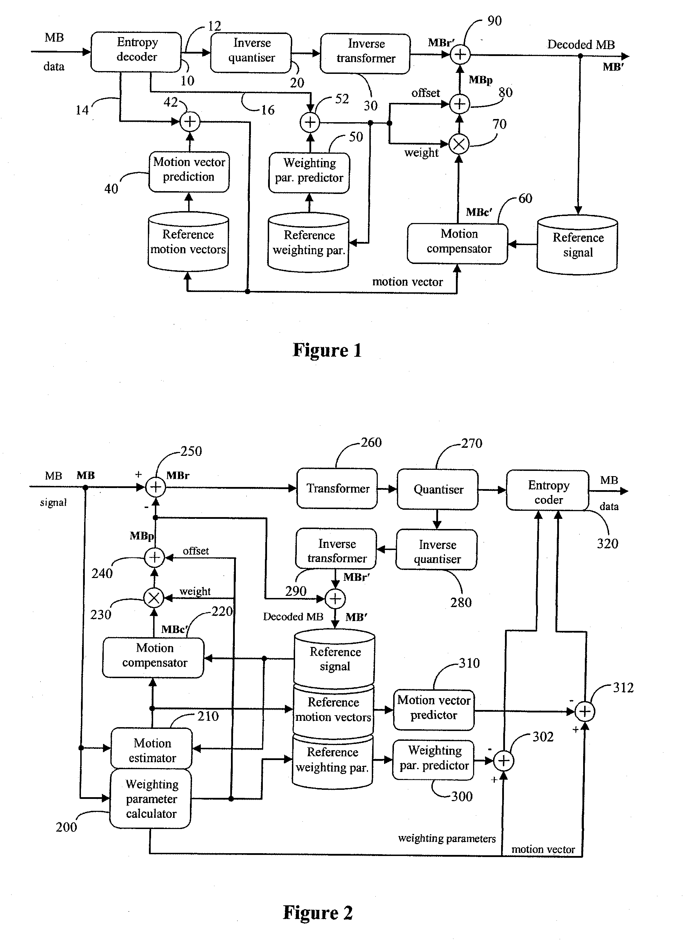

A diagram of a decoder incorporating MBWP is presented in Figure 1. The input stream of the current macroblock is entropy decoded by entropy decoder 10, resulting in the following data: quantised transformed samples of the current macroblock 12, motion vectors 14 and weighting parameters 16. All and any of these can be difference signals obtained by subtraction from the previously decoded data, and in that case prediction needs to be done, e.g. weighting parameters are predicted from the previously decoded ones, similarly as it is done for motion vectors, as shown in Figure 1. Motion compensation is then performed, using the decoded motion vectors and the previously decoded reference signal. Such motion compensated signal is then modified by applying weight and offset. The residual macroblock signal is obtained by inverse quantisation by inverse quantiser 20 and inverse spatial transform by inverse spatial transformer 30, after which the weighted prediction signal is added to obtain the decoded macroblock samples.

Accordingly, it will be understood from the above that the entropy decoder 10, the inverse quantiser 20 and the inverse transformer 30 operate as a decoder which decodes the encoded video data for a segment of a picture to generate decoded difference data MBr' for the segment, motion data 14 for the segment and weighting parameters 16 for the segment. The motion vector predictor 40, adder 42 and the motion compensator 60 act as a motion-compensated-data generator which processes the motion data 14 together with previously decoded video data to generate motion-compensated video data MBc' for the segment. The weighting parameter predictor 50, adder 52, multiplier 70 and adder 80 act as a predicted-data generator which generates predicted video data MBp for the segment by combining the motion-compensated video data MBc' for the segment with weighting parameters for the segment. As noted above, the weighting parameters for a segment may be different from the weighting parameters used for a different segment in the same picture. The adder 90 acts as a data combiner which combines the decoded difference data MBr' for the segment with the predicted video data MBp for the segment, thereby generating overall decoded video data MB' for the segment.

In the preferred embodiment the weighting prediction is defined only for the luma component, while in the alternative embodiments weighting prediction can be applied also for the chroma components, either by using the same or a separate set of weighting parameters.

In another alternative embodiment, the MBWP parameters can be conveyed as the difference in the weighting parameters for a particular macroblock from globally defined ones.

When applied to a codec with the structure similar to that of MPEG-4 AVC/H.264, the required signalling for MBWP is achieved with the additional information placed in the macroblock header portion of the video bit-stream instead of the slice (picture) header as in previous codecs. In the first embodiment, the required video bit-stream syntax elements are the following:

|  | | Descriptor |
|---|---|---|
| | **MBWP_parameters_present_flag** | 1 bit |
| if | (MBWP_parameters_present_flag){ | |
| | **MBWPo_predicted** = predict_MBWPo() | |
| | **MBWPw_predicted** = predict_MBWPw() | |
| | **MBWPo_difference** | signed variable-length code |
| | **MBWPw_difference** | signed variable-length code |
| | **MBWPo = MBWPo_predicted + MBWPo_difference** | |
| | **MBWPw = MBWPw_predicted + MBWPw_difference** | |
| | } | |

**MBWP_parameters_present_flag** signals the presence of the MBWP parameters if equal to 1. If this flag is equal to 0, then weighted prediction is not performed, and both parameters **MBWPo** and **MBWPw** are set to default values. Default values are defined to be those that, if applied, are equivalent to not performing MBWP. In an alternative embodiment, multiple flags can be encoded jointly across macroblocks by using run-length or quadtree coding, in order to avoid redundancy when MBWP is not utilised in large areas of the picture.

**MBWPo_difference** and **MBWPw_difference** are the difference signals from the predicted offset and weight values, where the derivation of weighting parameters **MBWPo** and **MBWPw** is done as presented below. In a preferred embodiment, variable length codes are used for entropy coding of these difference signals, but alternatively any other entropy coding method can be used, for instance arithmetic coding. In an alternative embodiment, the values of the previously decoded syntax elements may also be used by an entropy coding method in order to improve its efficiency.

Prediction operations predict_MBWPo() and predict_MBWPw() entail a spatial prediction of weighting parameters from the neighbouring macroblocks. In the preferred embodiment, for the prediction of the weighting parameters for the current macroblock, with position at row $r$ and column $c$ in the current picture, the averaging of the first neighbouring macroblock from the top (same column as current, previous row) and the first from the left (previously encoded) is employed:

$$o(r,c) = \text{predict\_MBWPo}(r,c) = \left[\left(o(r-1,c) + o(r,c-1)\right)/2\right] \qquad \ldots (7)$$

$$w(r,c) = \text{predict\_MBWPw}(r,c) = \left[\left(w(r-1,c) + w(r,c-1)\right)/2\right] \qquad \ldots (8)$$

where [·] denotes rounding to the nearest integer. It should be noted that this prediction can be modified in various ways - it can utilise more or fewer than two neighbouring macroblocks and/or use weighting in the prediction operator, or it can employ different operators, for instance median. In an alternative embodiment, the offset value for the current macroblock is used for prediction of the weight parameter for the same macroblock in addition to the previously decoded weighting parameters. In another alternative embodiment, the prediction of the weighted parameters uses other previously decoded syntax elements. In one example, the values of the motion vectors for current and previously decoded macroblocks are compared and the outcome of the comparison is used to guide the decision on the use of the previously decoded weighting parameters for the derivation of the weighting parameters for the current macroblock. For example, if the difference between the pair of motion vectors is large, the weighting parameters for the corresponding macroblock are excluded from being used for the prediction of the weighting parameters for the current macroblock. Also note that one option is to omit the prediction operation altogether and in that case the result of predict_MBWPo() and predict_MBWPw() is 0. In the following the row and column indices are omitted as the presented steps are understood to be working on the current macroblock.

The parameters are quantised in order to send them efficiently in the bitstream. Here the uniform quantisation step of 128 is used, while other quantisation steps and schemes are also possible. The offset and weight parameters are quantised in the following way:

$$o_q = Q_o(o) = \left[o\right] \qquad \ldots (9)$$

$$w_q = Q_w(w) = \left[128 \cdot w\right]/128 \qquad \ldots (10)$$

The integer values to be encoded $o_{qi}$ and $w_{qi}$ are obtained in the following way:

$$o_{qi} = M_o(o) = \left[o\right] \qquad \ldots (11)$$

$$w_{qi} = M_w(w) = \left[128(w-1)\right] \qquad \ldots (12)$$

so that the inverse mapping is defined as:

$$o = M_o^{-1}(o_{qi}) = o_{qi} \qquad \qquad \dots (13)$$

$$w = M_w^{-1}(w_{qi}) = 1 + w_{qi}/128 \qquad \qquad \dots (14)$$

The default non-weighted prediction values are $o = 0$ ($o_{qi} = 0$) and $w = 1$($w_{qi} = 0$).

With the quantisation scheme as presented above the values $o_{qi}$ and $w_{qi}$ increase with the increasing absolute difference from $(o,w)=(0,1)$. Since the majority of weighting parameters in practice are close to $(0,1)$, this is used in the subsequent entropy coding by assigning shorter codes to $o_{qi}$ and $w_{qi}$ of smaller absolute values. Other quantisation schemes can, for instance, employ non-uniform step sizes for weights to achieve higher precision in the ranges of values where it brings compression performance benefit.

The values $o_{qi}$ and $w_{qi}$ are directly represented with **MBWPo** and **MBWPw** in the syntax description above. The weighted prediction can be then written as:

$$\mathbf{MBp} = o_{qi} + \left[ (w_{qi} + 128)\mathbf{MBc'}/128 \right] \qquad \qquad \dots (15)$$

The obtained values are subsequently clipped to the defined range of the picture samples. It is worth noting that the process of weighted prediction can be easily implemented as division-free integer-safe operation, by replacing divisions by bit-shift operators.

**Encoder**

An embodiment will now be described of an encoder which performs a fast method for deriving optimal or near-optimal offset and weight parameters during the encoding process. The location of this procedure (MBWP parameter derivation) in the overall encoding process is illustrated in Figure 2.

Referring to Figure 2, the motion estimator 210 and motion compensator 220 act as a motion-compensated-data generator which processes video data MB for a segment to generate motion data for the segment (this motion data comprising motion vectors in the present embodiment) and applies the motion data to the video data of the segment to generate motion-compensated video data for the segment. The weighting parameter calculator 200 acts as a weighting parameter calculator which calculates weighting parameters for the segment. As noted previously, the weighting parameters for a segment can be different from the weighting parameter used for a different segment in the same picture. The multiplier 230 and the adder 240 act as a weighted-motion-compensated-data generator which combines the motion-compensated video data and the weighting parameters to generate weighted-motion-compensated-data MBp for the segment. The adder 250 acts as a difference-data generator which generates difference data MBr defining a difference between the input video data MB for the segment and the weighted-motion-compensated-data MBp. The transformer 260, quantiser 270 and entropy coder 320 act as an encoder which encodes data for the segment comprising the difference data MBr for the segment, the motion data for the segment, and the weighting parameters for the segment. This is the data which is transmitted to the decoder described previously for decoding.

The procedure of fast derivation of the MBWP parameters is divided into three steps, which are described in the following. For the sake of simpler representation the description is based on a single reference picture MBWP, while the same idea can be applied to the case of multiple reference pictures as a straightforward extension of the presented relations and algorithmic steps. The selection of motion vectors for which the MBWP is tested for is not discussed here, as the described method applies for a single macroblock matching and is independent of the motion estimation process.

*1. Finding distortion-optimal weighting parameters*

In this step the optimal weighting prediction parameters are found with respect only to the distortion part of the encoding cost.

To minimise the distortion in the form of the $L_2$ norm between two macroblocks the following expression needs to be optimised, with offset and weight as the optimisation variables:

$$D = \left(\mathbf{MBp} - \mathbf{MB}\right)^2 \qquad \ldots (16)$$

To simplify the expressions, the following is defined:

$$\mathbf{MBc} = \mathbf{X} = \left[x_1, \ldots, x_N\right] \qquad \ldots (17)$$

$$\mathbf{MB} = \mathbf{Y} = \left[y_1, \ldots, y_N\right] \qquad \ldots (18)$$

where **MB** is the current block, and $N$ is the number of pixels in a macroblock. The distortion expression then becomes:

$$D(o,w) = \left(o + w \cdot \left[x_1, \ldots, x_N\right] - \left[y_1, \ldots, y_N\right]\right)^2 \qquad \ldots (19)$$

This corresponding minimisation problem is modelled as a linear least squares optimisation problem, and represented with the following relation:

$$D_{\min} = \min_{o,w}\left(D(o,w)\right) \qquad \ldots (20)$$

Partial derivative by $o$ and $w$ yields:

$$\frac{\partial D}{\partial o} = \sum_{i}^{N}\left(o + wx_i - y_i\right) = 0 \qquad \ldots (21)$$

$$\frac{\partial D}{\partial w} = \sum_{i}^{N} 2x_i\left(o + wx_i - y_i\right) = 0 \qquad \ldots (22)$$

Solving these two for $o$ and $w$ gives:

$$w_{\min} = \frac{N\sum x_i y_i - \sum y_i \sum x_i}{N\sum x_i^2 - \left(\sum x_i\right)^2} = \frac{E(\mathbf{XY}) - E(\mathbf{X})E(\mathbf{Y})}{E\left(\mathbf{X}^2\right) - E^2(\mathbf{X})} \qquad \ldots (23)$$

$$o_{\min} = E(\mathbf{Y}) - w_{\min}E(\mathbf{X})$$

However, since the problem at hand is somewhat different to the conventional least squares fitting because the parameters $o$, $w$ and the operation of weighting are quantised, this problem can be generally classified as an integer least squares estimation. This problem is known to be NP-hard (i.e. impossible to determine the optimal parameters in practical amount of time), thus some fast approximation is required.

Distortion expression now can be written as a function of $o$ and $w$:

$$D(o,w) = N\left(o^2 - 2oE(\mathbf{Y}) + 2woE(\mathbf{X}) + w^2 E\left(\mathbf{X}^2\right) - 2wE(\mathbf{XY}) + E\left(\mathbf{Y}^2\right)\right) \quad \ldots (24)$$

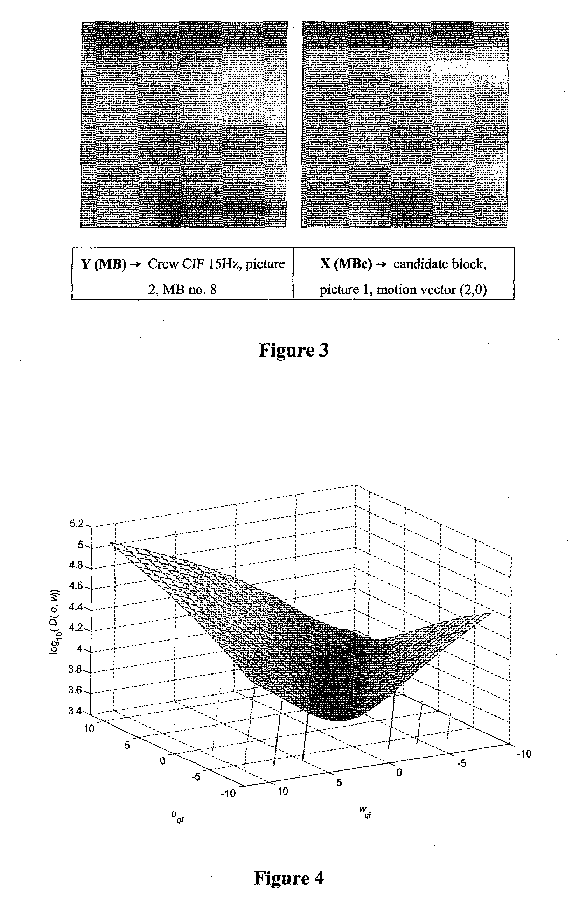

In the following an example is given, where two blocks depicted in Figure 3 are selected for which the above defined function is plotted in Figure 4.

Computation of the minimum distortion point leads to (with the introduction of shorthand varibles $A, B, C, D, E$):

$$\left.\begin{array}{l} A = E\left(\mathbf{X}^2\right) = 6627.2 \\ B = E(\mathbf{X}) = 80.8 \\ C = E(\mathbf{XY}) = 6277.2 \\ D = E(\mathbf{Y}) = 76.5 \\ E = E\left(\mathbf{Y}^2\right) = 5971.6 \end{array}\right\} \quad \begin{array}{l} w_{\min} = \dfrac{C - BD}{A - B^2} = 0.962 \\[2mm] o_{\min} = \dfrac{AD - BC}{A - B^2} = D - w_{\min}B = -1.21 \end{array} \quad \ldots (25)$$

where the denominator in the relations above is equal to the variance of $\mathbf{X}$, i.e., $A - B^2 = \sigma_{\mathbf{X}}^2$ The computed values correspond to the example blocks in Figure 3. In the case $\sigma_X = 0$ (constant value $\mathbf{X}$), it is defined $w_{\min} = 1$ and $o_{\min} = D - B$. Using this notation, the relation for distortion can be written in a form of general bivariate quadratic curve:

$$D(o,w) = N\left(o^2 + Aw^2 + 2Bwo - 2Cw - 2Do + E\right) \quad \ldots (26)$$

Also, when (25) is plugged into (26):

$$\begin{aligned} D_{\min} &= D\left(o_{\min}, w_{\min}\right) \\ &= N\left(E\left(\mathbf{Y}^2\right) - o_{\min}E(\mathbf{Y}) - w_{\min}E(\mathbf{XY})\right) \quad \ldots (27) \\ &= N\left(E - o_{\min}D - w_{\min}C\right) \end{aligned}$$

*2. Rate-constrained cost formulation*

In this step a complete relation for rate-constrained Lagrangian cost is derived, taking into account both the representation distortion and coding cost.

In the following the Exp-Golomb entropy coding is used for coding the MBWP parameters, but other schemes are also possible, with the requirement that the exact or approximate code lengths are available to the cost estimator. One example is the Context-Adaptive Binary Arithmetic Coding (CABAC). If the data to be encoded is denoted as x, the length of the associated Exp-Golomb code R(x) is defined as:

$$R(x) = \begin{cases} x = 0 & 1 \\ x \neq 0 & 1 + 2\big[\log_2(|x|) + 0.5\big] \end{cases} \qquad \ldots (28)$$

A rate constrained formulation of the MBWP encoding, for non-predictive MBWP parameters coding, then can be written in the Lagrangian multiplier form:

$$R(o,w) = R(o) + R(w) \qquad \ldots (29)$$

$$J(o,w) = D(o,w) + \lambda R(o,w) \qquad \ldots (30)$$

Here $R(o,w)$ is defined only in points $(o_{qi}, w_{qi})$. An equivalent formulation is used in motion estimation for the purpose of regularising the motion vector field. Here the same principle is extended for MBWP of which the parameters can be understood as an extension to the MV information. More particularly, MV information can be added to (29) and (30) to obtain a joint MV-MBWP cost, for example as:

$$J(o,w,mv) = D(o,w,mv) + \lambda_{WP} R(o,w) + \lambda_{MV} R(mv), \qquad \ldots (31)$$

where $mv$ is the motion vector, and the Lagrangian multipliers for motion vectors $\lambda_{MV}$ and weighting parameters $\lambda_{WP}$ generally can differ. This cost is used when comparing joint pairs of motion vectors and weighting parameters when selection is made prior to the macroblock mode selection.

The formulation for the predictive coding of MBWP parameters is similar, with the correction consisting of redefining the $o_{qi}$ - $w_{qi}$ space so that the predicted value is in its origin.

In Figures 4 to 6, an example is given, where two blocks are selected for which the above defined functions are plotted.

*3. Local search for a globally minimal cost*

In this step a local search in the direction of the decreasing rate cost is performed, in order to find the global minimum of the Lagrangian on an integer grid.

From Figures 4 to 6, it is evident that the rate part of the Lagrangian cost can affect the location of the global minimum. Influence of the rate part strongly depends on the operational Lagrangian multiplier, and is higher for the lower bit-rates (larger $\lambda_{WP}$). Note that the effect of rounding operation in the weighting operation is not considered at this stage, only the quantisation of the MBWP parameters.

The rate part of the Lagrangian cost function effectively moves the position of the global minimum from its position when only the distortion function is considered, and since the relation for the Lagrangian cost is non-analytical (expression for global minimum cannot be derived) some other way of locating it is needed. To avoid computing $J(o,w)$ for each $(o_{qi}, w_{qi})$ pair, a local search in the $o_{qi}$ - $w_{qi}$ space that exploits the properties of the rate and distortion component functions is conducted so that the distortion (26) needs to be computed only for a small subset of all possible $(o_{qi}, w_{qi})$. Also, note that some other coding method apart from Exp-Golomb can be used having the same property of rate strictly increasing with the distance from the coordinates with the shortest code (e.g. (0,0)).

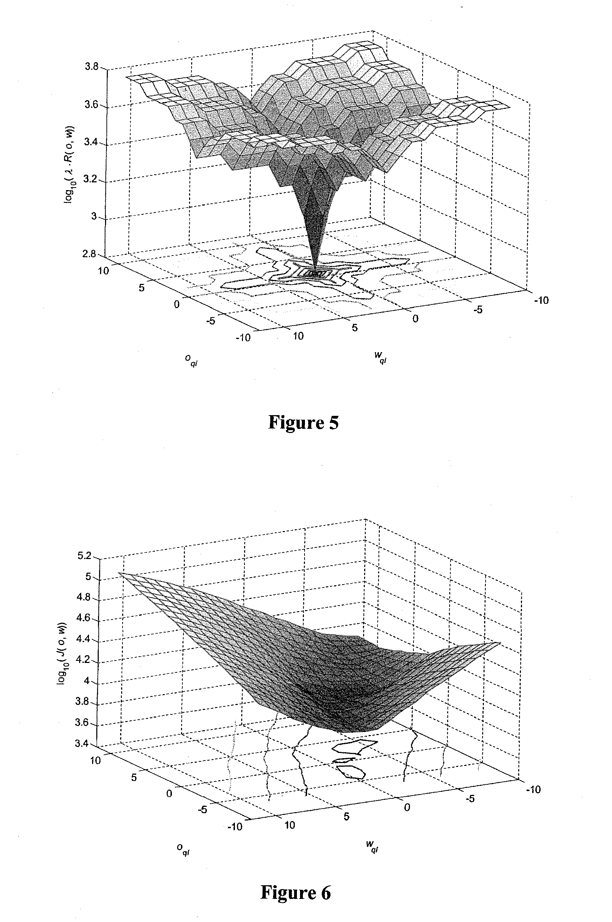

The search computes the cost around the line of minimum distortion for the constant $w$, Figure 5. This line can be found by using (21) and is defined with:

$$o + wB - D = 0 \qquad \ldots (32)$$

The search loops over different $w$, where for each $w$ the cost is computed for the certain range of the parameter

$o$ around the line (32), in the direction of axis $w$ as that is the direction of decreasing rate cost. It can be seen that the line (32) crosses the $w$-axis (where $o = 0$) at point $w_0 = D/B$, and this point divides the search into two segments, one looping over increasing $o$ (points $w > w_0$) and the other over decreasing $o$ (points $w < w_0$). The general form of the search algorithm then can be written as:

$$\text{Find the weight parameter search window } \left[w_{start}, w_{end}\right], \text{ set } J_{\min} = \infty$$

$$\text{For } w = w_{start} \text{ to } w_{end}$$

$$o_{end=0}$$

$$\text{If } w > w_0$$

$$o_{start=\lfloor D-wB \rfloor}$$

$$\text{Else}$$

$$o_{start=\lceil D-wB \rceil}$$

$$\text{For } o = o_{start} \text{ to } o_{end}$$

$$\text{If } J\left(o,w\right) < J_{\min} \text{ then } J_{\min} = J\left(o,w\right)$$

$$\text{If reduction of cost is not expected then break}$$

In the above, $\lfloor \rfloor$ and $\lceil \rceil$ are floor and ceiling functions, respectively. In particular, rounding down is performed when the variable $w$ is larger than $w_0$ meaning this corresponds to the part of the minimal distortion line that lies on the left of the w axis (all negative offsets). Note that the direction of search is arbitrary.

In the preferred embodiment, the condition for possibility of reduction of cost can be expressed with rate and distortion gradients fulfilling relation $\Delta D(o,w) < -\lambda \cdot \Delta R(o+1,w)$. This relation is constructed so that the local search visits the offset coordinates in such a way that $\Delta D(o,w)$ is strictly non-decreasing, while $\Delta R(o + 1,w)$ is either 0 or some fixed negative value (for instance, -2 bits for Exp-Golomb coding). Note that the roles of offset and weight could be reversed in this search, and in that case the search around the line of minimum distortion for the constant $o$ would be used.

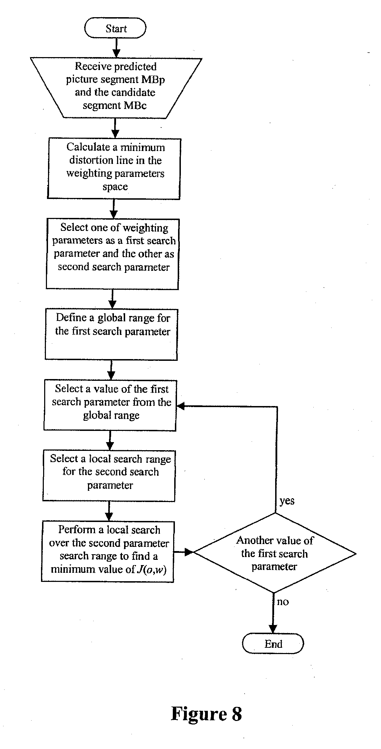

Figure 8 is a flowchart summarizing the processing operations described above that are performed by the encoder in the preferred embodiment to calculate the offset and weight.

*4. Weighting parameters quantisation consideration*

To take into account the location ambiguity of the global distortion minimum for quantised MBWP parameters, the search range is extended to cover the potential location of this minimum. To this end, the constant distortion ellipse can be defined as:

$$D\left(o,w\right) - D_c = 0 , \qquad\qquad \ldots (33)$$

where $D_c$ is the selected distortion. That this an ellipse can be checked by plugging it into the necessary conditions, from which it follows that conditions $\sigma_{\mathbf{X}}^2 > 0$ and $D_{\min} < D_c$ must be fulfilled. Here $D_c$ can be picked arbitrarily as long it encompassed at least one $(o_{qi}, w_{qi})$ coordinate, but the closer it is to $D_{\min}$ the better as the ellipse will be smaller and capture less potential integer minimums that would need to be visited in the search loop. Here, $D_c$ is selected by computing the distortion at the point closest to the global minimum: $D_c = D\left(M_o^{-1}\left(M_o\left(o_{\min}\right)\right), M_w^{-1}\left(M_w\left(w_{\min}\right)\right)\right)$ Then the extreme $o$ coordinates of such ellipse are found, which are used when setting the start and end points of the search:

$$\left(o_{e1}, o_{e2}\right) = \frac{AD - BC \pm B\sqrt{\left(A - B^2\right)\left(D_c/N - E\right) + AD^2 + C^2 - 2BCD}}{A - B^2}$$

$$= o_{\min} \pm B\frac{\sqrt{\left(D_c - D_{\min}\right)/N}}{\sigma_X} \qquad \dots (34)$$

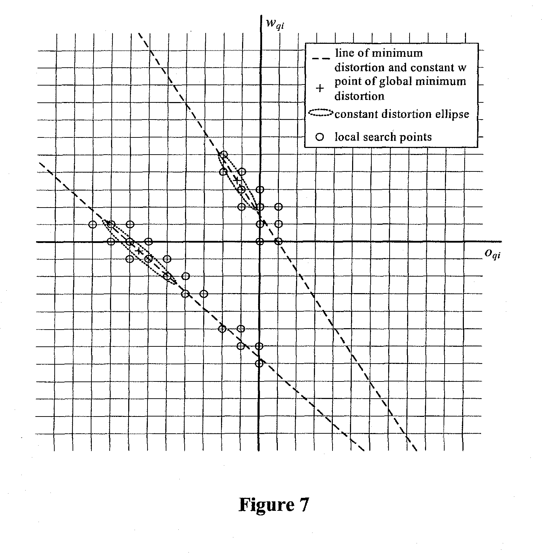

The weight values that correspond to $o_{e1}$ and $o_{e2}$ are used to modify $w_{start}$ and $w_{end}$ so that the range $[w_{start}, w_{end}]$ includes them. The procedure of search for two distinct exemplary cases is depicted in Figure 7.

**Modifications and Variations**

It will be appreciated that many modifications and variations can be made to the embodiment described above.
In particular, although the components of the decoder and the encoder described above comprise hardware components, the decoder and/or the encoder may be implemented using software and/or firmware. Similarly, the decoder and/or encoder may comprise a combination of hardware and software/firmware components. Accordingly, an embodiment of the present invention comprises a computer program product, in the form of a storage device or a signal, carrying computer program instructions to program a programmable processing apparatus to become operable to perform the processing operations described above.

**Claims**

1. A video decoder operable to decode predictively-encoded video data defining a sequence of pictures, each picture divided into a plurality of segments, the decoder comprising:

   a decoder (10, 20, 30) operable to decode the encoded video data to generate decoded difference data (MBr') for a segment of a picture, motion data (14) for the segment and at least one weighting parameter (16) for the segment;
   a motion-compensated-data generator (40, 42, 60) operable to process the motion data and previously decoded video data to generate motion-compensated video data (MBc') for the segment;
   a predicted-data generator (50, 52, 70, 80) operable to generate predicted video data (MBp) for the segment by combining the motion-compensated video data (MBc') for the segment with at least one weighting parameter for the segment that is different from a weighting parameter used for a different segment in the same picture; and
   a data combiner (90) operable to combine the decoded difference data (MBr') for the segment with the predicted video data (MBp) for the segment.

2. A video decoder according to Claim 1, wherein:

   the decoder (10, 20, 30) is operable to decode the encoded video data to generate a plurality of weighting parameters ($w_0 \dots w_N$) for the segment;
   the motion-compensated-data generator (40, 42, 60) is operable to process the motion data and previously decoded video data for a plurality of segments to generate respective motion-compensated video data ($MBc_0' \dots MBc_N'$) for each of the plurality of segments; and
   the predicted-data generator is operable to combine the motion-compensated video data ($MBc_0' \dots MBc_N'$) for each of the plurality of segments with a respective one of the weighting parameters ($w_0 \dots w_N$) to generate the predicted video data ($w_0 MBc_0' + \dots w_0 MBc_N'$).

3. A video decoder according to Claim 2, wherein the motion-compensated-data generator (40, 42, 60) is operable to process the motion data and previously decoded video data for a plurality of segments in different respective pictures to generate the respective motion-compensated video data for each of the plurality of segments.

4. A video decoder according to any preceding claim, wherein:

the decoder (10, 20, 30) is operable to decode the encoded video data to generate difference data for the at least one weighting parameter; and

the predicted-data generator (50, 52, 70, 80) is operable to generate the predicted video data (MBp) for the segment by deriving at least one weighting parameter for the segment using the difference data for the at least one weighting parameter from the decoder and at least one previously decoded weighting parameter derived for a previously decoded segment.

5. A video decoder according to Claim 4, wherein the predicted-data generator (50, 52, 70, 80) is operable to generate the predicted video data (MBp) for the segment by:

predicting at least one weighting parameter for the segment from a weighting parameter of at least one neighbouring segment that has been previously decoded;

combining the at least one predicted weighting parameter with the at least one weighting parameter from the decoder to generate at least one resultant predicted weighting parameter; and

combining the motion-compensated video data (MBc') for the segment with the at least one resultant predicted weighting parameter to generate the predicted video data (MBp) for the segment.

6. A video decoder according to Claim 5, wherein the predicted-data generator (50, 52, 70, 80) is operable to predict the at least one weighting parameter for the segment by calculating an average of the weighting parameters of at least two neighbouring segments that have been previously decoded.

7. A video decoder according to any preceding claim, wherein the predicted-data generator (50, 52, 70, 80) is operable to:

compare the motion data for the segment with the motion data for at least one previously decoded segment to determine a measure of the similarity therebetween; and

if the determined measure indicates a high similarity, use a weighting parameter for the at least one previously decoded segment to generate a predicted weighting parameter for the segment and combine the motion-compensated video data with the predicted weighting parameter.

8. A video decoder according to any preceding claim, wherein the decoder (10, 20, 30) is operable to decode the encoded video data to generate an offset weighting parameter and a weight weighting parameter such that the value of the offset weighting parameter is represented with fewer bits the closer the value is to zero and the value of the weight weighting parameter is represented with fewer bits the closer the value is to one.

9. A video encoder operable to predictively encode video data defining a sequence of pictures, each picture divided into a plurality of segments, the encoder comprising:

a motion-compensated-data generator (210, 220) operable to process video data (MB) for a segment to generate motion data for the segment and motion-compensated video data;

a weighting parameter calculator (200) operable to calculate at least one weighting parameter for the segment that is different from a weighting parameter used for a different segment in the same picture;

a weighted-motion-compensated-data generator (230, 240) operable to combine the motion-compensated video data and the at least one weighting parameter to generate weighted-motion-compensated-data (MBp) for the segment;

a difference-data generator (250) operable to generate difference data (MBr) defining the difference between the video data (MB) for the segment and the weighted-motion-compensated-data (MBp) for the segment; and

an encoder (260, 270, 320) operable to encode data for the segment comprising the difference data (MBr) for the segment, the motion data for the segment, and the at least one weighting parameter for the segment.

10. A video encoder according to Claim 9, wherein:

the weighting parameter calculator (200) is operable to calculate a plurality of weighting parameters ($w_0 ... w_N$) for the segment;

the motion-compensated-data-generator (210, 220) is operable to process the video data for the segment and a plurality of different segments to generate a plurality of respective motion-compensated video data segments ($MBc_0, ..., MBc_N$);

the weighted-motion-compensated-data generator (230, 240) is operable to generate the weighted-motion-

compensated-data ($w_0MBc_0$, ..., $w_NNIBc_N$) by combining the plurality of motion-compensated video data segments ($MBc_0$, ..., $MBc_N$) and the plurality of weighting parameters ($w_0$ ... $w_N$) such that each respective one of the plurality of motion-compensated video data segments is weighted by a respective one of the plurality of weighting parameters.

11. A video encoder according to Claim 10, wherein the motion-compensated-data generator (210, 220) is operable to process the video data for the segment and a plurality of segments in different respective pictures to generate the plurality of respective motion-compensated video data segments ($MBc_0$, ..., $MBc_N$).

12. A video encoder according to any of Claims 9 to 11, further comprising a weighting parameter difference calculator (300, 302) operable to calculate, for each weighting parameter for the segment, a weighting parameter difference value for the segment comprising a difference between the weighting parameter for the segment and the weighting parameter for a previous segment;
and wherein the encoder is arranged to encode data for the segment comprising the difference data (MBr) for the segment, the motion data for the segment, and the weighting parameter difference value(s) for the segment.

13. A video encoder according to Claim 12, wherein the weighting parameter difference calculator (300, 302) is operable to generate the difference value for the segment by:

   predicting at least one predicted weighting parameter for the segment from a weight parameter of at least one previous neighbouring segment; and
   calculating a difference between the at least one weighting parameter calculated by the weighting parameter calculator (200) and the at least one predicted weighting parameter.

14. A video encoder according to any of Claims 9 to 13, wherein the weighting parameter calculator (200) is arranged to calculate a weighting parameter comprising an offset (o) and a weight (w) and is arranged to calculate an offset value and a weight value which minimises the cost function $J(o,w)$:

$$J(o,w) = D(o,w) + \lambda R(o,w)$$

where o is the offset, w is the weight, D is a distortion measure comprising a difference between the weighted-motion-compensated-data (MBp) for the segment and the video data (MB) for the segment, R is a measure of encoded data rate and $\lambda$ is a Lagrangian multiplier by:

   a) calculating a line in offset-weight space defining pairs of offset-weight values which represent a minimum of the distortion measure D;
   b) selecting one of the offset and the weight as a first search parameter and the other as a second search parameter;
   c) selecting a global range of the first search parameter;
   d) selecting a value of the first search parameter from the selected global range;
   e) selecting a local search range for the second search parameter;
   f) for the selected constant value of the first search parameter, searching in the vicinity of the line within the local search range to identify therein the value of the second search parameter which gives a minimum value of $J(o,w)$;
   g) repeating process d) to f) for different constant values of the first search parameter to find the combination of offset and weight values which give an overall minimum value of $J(o,w)$.

15. A video encoder according to Claim 14, wherein the weighting parameter calculator (200) is arranged to perform process f) such that continuously increasing or continuously decreasing values of the first search parameter within the local search range are tested while:

$$\Delta D < -\lambda \cdot \Delta R$$

where $\Delta D$ is the change in distortion measure and $\Delta R$ is the change in rate measure.

**Amended claims in accordance with Rule 137(2) EPC.**

**1.** A video decoder operable to decode predictively-encoded video data defining a sequence of pictures, each picture divided into a plurality of segments, the decoder comprising:

a decoder (10, 20, 30) operable to decode the encoded video data to generate decoded difference data (MBr') for a segment of a picture, motion data (14) for the segment and weighting parameters (16) for weighted prediction of the segment comprising an offset weighting parameter and a weight weighting parameter, wherein the weighting parameters are weighting parameters which minimise a rate-constrained cost formulation taking into account both the representation distortion and coding cost; and
a motion-compensated-data generator (40, 42, 60) operable to process the motion data and previously decoded video data to generate motion-compensated video data (MBc') for the segment;
a predicted-data generator (50, 52, 70, 80) operable to generate predicted video data (MBp) for the segment by combining the motion-compensated video data (MBc') for the segment with weighting parameters for the segment comprising an offset weighting parameter and a weight weighting parameter, wherein at least one weighting parameter for the segment is different from a weighting parameter used for a different segment in the same picture; and
a data combiner (90) operable to combine the decoded difference data (MBr') for the segment with the predicted video data (MBp) for the segment.

**2.** A video decoder according to Claim 1, wherein:

the decoder (10,20, 30) is operable to decode the encoded video data to generate a respective weight weighting parameter ($w_0$ ... $w_N$) for each of a plurality of segments;
the motion-compensated-data generator (40, 42, 60) is operable to process the motion data and previously decoded video data for a plurality of segments to generate respective motion-compensated video data ($MBc_0$' ... $MBc_N$') for each of the plurality of segments; and
the predicted-data generator is operable to combine the motion-compensated video data ($MBc_0$'... $MBc_N$') for each of the plurality of segments with a respective one of the weight weighting parameters ($w_0$ ... $w_N$) to generate the predicted video data ($w_0MBc_0$' + ... $w_0MBc_N$').

**3.** A video decoder according to Claim 2, wherein the motion-compensated-data generator (40, 42, 60) is operable to process the motion data and previously decoded video data for a plurality of segments in different respective pictures to generate the respective motion-compensated video data for each of the plurality of segments.

**4.** A video decoder according to any preceding claim, wherein:

the decoder (10, 20, 30) is operable to decode the encoded video data to generate difference data for the weighting parameters; and
the predicted-data generator (50, 52, 70, 80) is operable to generate the predicted video data (MBp) for the segment by deriving weighting parameters for the segment using the difference data for the weighting parameters from the decoder and previously decoded weighting parameters derived for a previously decoded segment.

**5.** A video decoder according to Claim 4, wherein the predicted-data generator (50, 52, 70, 80) is operable to generate the predicted video data (MBp) for the segment by:

predicting weighting parameters for the segment from weighting parameters of at least one neighbouring segment that has been previously decoded;
combining the predicted weighting parameters with the weighting parameters from the decoder to generate resultant predicted weighting parameters; and
combining the motion-compensated video data (MBc') for the segment with the resultant predicted weighting parameters to generate the predicted video data (MBp) for the segment.

**6.** A video decoder according to Claim 5, wherein the predicted-data generator (50, 52, 70, 80) is operable to predict the weighting parameters for the segment by calculating an average of the weighting parameters of at least two neighbouring segments that have been previously decoded.

**7.** A video decoder according to any preceding claim, wherein the predicted-data generator (50, 52, 70, 80) is operable to:

compare the motion data for the segment with the motion data for at least one previously decoded segment to determine a measure of the similarity therebetween; and

if the determined measure indicates a high similarity, use weighting parameters for the at least one previously decoded segment to generate predicted weighting parameters for the segment and combine the motion-compensated video data with the predicted weighting parameters.

**8.** A video decoder according to any preceding claim, wherein the decoder (10, 20, 30) is operable to decode the encoded video data to generate the offset weighting parameter and the weight weighting parameter such that the value of the offset weighting parameter is represented with fewer bits the closer the value is to zero and the value of the weight weighting parameter is represented with fewer bits the closer the value is to one.

**9.** A video encoder operable to predictively encode video data defining a sequence of pictures, each picture divided into a plurality of segments, the encoder comprising:

a motion-compensated-data generator (210, 220) operable to process video data (MB) for a segment to generate motion data for the segment and motion-compensated video data;

a weighting parameter calculator (200) operable to calculate weighting parameters for weighted prediction of the segment comprising an offset weighting parameter and a weight weighting parameter which minimise a rate-constrained cost formulation taking into account both the representation distortion and coding costs, with at least one weighting parameter for the segment being different from a weighting parameter used for a different segment in the same picture;

a weighted-motion-compensated-data generator (230, 240) operable to combine the motion-compensated video data and the weighting parameters to generate weighted-motion-compensated-data (MBp) for the segment;

a difference-data generator (250) operable to generate difference data (MBr) defining the difference between the video data (MB) for the segment and the weighted-motion-compensated-data (MBp) for the segment; and

an encoder (260, 270, 320) operable to encode data for the segment comprising the difference data (MBr) for the segment, the motion data for the segment, and the weighting parameters for the segment.

**10.** A video encoder according to Claim 9, wherein:

the weighting parameter calculator (200) is operable to calculate a respective weight weighting parameter ($w_0$ ... $w_N$) for each of a plurality of segments;

the motion-compensated-data-generator (210, 220) is operable to process the video data for a segment and a plurality of different segments to generate a plurality of respective motion-compensated video data segments ($MBc_0$, ..., $MBc_N$);

the weighted-motion-compensated-data generator (230, 240) is operable to generate the weighted-motion-compensated-data ($w_0 MBc0$, ..., $w_N MBc_N$) by combining the plurality of motion-compensated video data segments ($MBc_0$, ..., $MBc_N$) and the plurality of weight weighting parameters ($w_0$ ... $w_N$) such that each respective one of the plurality of motion-compensated video data segments is weighted by a respective one of the plurality of weight weighting parameters.

**11.** A video encoder according to Claim 10, wherein the motion-compensated-data generator (210, 220) is operable to process the video data for the segment and a plurality of segments in different respective pictures to generate the plurality of respective motion-compensated video data segments ($MBc_0$,..., $MBc_N$).

**12.** A video encoder according to any of Claims 9 to 11, further comprising a weighting parameter difference calculator (300, 302) operable to calculate, for each weighting parameter for the segment, a weighting parameter difference value for the segment comprising a difference between the weighting parameter for the segment and the weighting parameter for a previous segment; and wherein the encoder is arranged to encode data for the segment comprising the difference data (MBr) for the segment, the motion data for the segment, and the weighting parameter difference values for the segment.

**13.** A video encoder according to Claim 12, wherein the weighting parameter difference calculator (300, 302) is operable to generate each difference value for the segment by:

predicting a predicted weighting parameter for the segment from a weighting parameter of at least one previous neighbouring segment; and
calculating a difference between the weighting parameter calculated by the weighting parameter calculator (200) and the predicted weighting parameter.

**14.** A video encoder according to any of Claims 9 to 13, wherein the weighting parameter calculator (200) is arranged to calculate an offset weighting parameter and a weight weighting parameter which minimise the cost function J(o,w):

$$J(o,w) = D(o,w) + \lambda R(o,w)$$

where o is the offset, w is the weight, D is a distortion measure comprising a difference between the weighted-motion-compensated-data (MBp) for the segment and the video data (MB) for the segment, R is a measure of encoded data rate and $\lambda$ is a Lagrangian multiplier by:

a) calculating a line in offset-weight space defining pairs of offset-weight values which represent a minimum of the distortion measure D;
b) selecting one of the offset and the weight as a first search parameter and the other as a second search parameter;
c) selecting a global range of the first search parameter;
d) selecting a value of the first search parameter from the selected global range;
e) selecting a local search range for the second search parameter;
f) for the selected constant value of the first search parameter, searching in the vicinity of the line within the local search range to identify therein the value of the second search parameter which gives a minimum value of J(o,w);
g) repeating process d) to f) for different constant values of the first search parameter to find the combination of offset and weight values which give an overall minimum value of J(o,w).

**15.** A video encoder according to Claim 14, wherein the weighting parameter calculator (200) is arranged to perform process f) such that continuously increasing or continuously decreasing values of the first search parameter within the local search range are tested while:

$$\Delta D < -\lambda \cdot \Delta R$$

where $\Delta D$ is the change in distortion measure and $\Delta R$ is the change in rate measure.

**16.** A video decoding method of decoding predictively-encoded video data defining a sequence of pictures, each picture divided into a plurality of segments, the method comprising:

decoding the encoded video data to generate decoded difference data (MBr') for a segment of a picture, motion data (14) for the segment and weighting parameters (16) for weighted prediction of the segment comprising an offset weighting parameter and a weight weighting parameter, wherein the weighting parameters are weighting parameters which minimise a rate-constrained cost formulation taking into account both the representation distortion and coding cost;
processing the motion data and previously decoded video data to generate motion-compensated video data (MBc') for the segment;
generating predicted video data (MBp) for the segment by combining the motion-compensated video data (MBc') for the segment with weighting parameters for the segment comprising an offset weighting parameter and a weight weighting parameter, wherein at least one weighting parameter for the segment is different from a weighting parameter used for a different segment in the same picture; and
combining the decoded difference data (MBr') for the segment with the predicted video data (MBp) for the segment.

**17.** A video encoding method of predictively encoding video data defining a sequence of pictures, each picture divided into a plurality of segments, the method comprising:

processing video data (MB) for a segment to generate motion data for the segment and motion-compensated video-data;

calculating weighting parameters for weighted prediction of the segment comprising an offset weighting parameter and a weight weighting parameter which minimise a rate-constrained cost formulation taking into account both the representation distortion and coding costs, with at least one weighting parameter for the segment being different from a weighting parameter used for a different segment in the same picture;

combining the motion-compensated video data and the weighting parameters to generate weighted-motion-compensated-data (MBp) for the segment;

generating difference data (MBr) defining the difference between the video data for the segment and the weighted-motion-compensated-data (MBp) for the segment; and

encoding data for the segment comprising the difference data (MBr) for the segment, the motion data for the segment, and the weighting parameters for the segment.

**18.** A computer program product carrying computer program instructions to program a programmable processing apparatus to become operable to perform a video decoding method as set out in Claim 16.

**19.** A computer program product carrying computer program instructions to program a programmable processing apparatus to become operable to perform a video encoding method as set out in Claim 17.

**Figure 1**

**Figure 2**

| Y (MB) → Crew CIF 15Hz, picture 2, MB no. 8 | X (MBc) → candidate block, picture 1, motion vector (2,0) |
|---|---|

**Figure 3**

**Figure 4**

**Figure 5**

**Figure 6**

**Figure 7**

```
              ┌─────────────┐
              │    Start    │
              └──────┬──────┘
                     │
                     ▼
          ╱──────────────────────╲
         │   Receive predicted    │
         │  picture segment MBp   │
         │   and the candidate    │
          ╲   segment MBc        ╱
           ╲───────────┬────────╱
                       │
                       ▼
            ┌────────────────────┐
            │ Calculate a minimum│
            │  distortion line in│
            │ the weighting      │
            │  parameters space  │
            └─────────┬──────────┘
                      │
                      ▼
            ┌────────────────────┐
            │ Select one of      │
            │ weighting          │
            │ parameters as a    │
            │ first search       │
            │ parameter and the  │
            │ other as second    │
            │ search parameter   │
            └─────────┬──────────┘
                      │
                      ▼
            ┌────────────────────┐
            │ Define a global    │
            │ range for the first│
            │ search parameter   │
            └─────────┬──────────┘
                      │
                      ▼
            ┌────────────────────┐
            │ Select a value of  │◄──────────────┐
            │ the first search   │               │
            │ parameter from the │               │
            │ global range       │               │
            └─────────┬──────────┘               │
                      │                          │
                      ▼                          │
            ┌────────────────────┐               │
            │ Select a local     │               │
            │ search range for   │               │
            │ the second search  │               │
            │ parameter          │               │
            └─────────┬──────────┘          yes  │
                      │                          │
                      ▼                  ╱────────────╲
            ┌────────────────────┐      ╱  Another     ╲
            │ Perform a local    │     ╱   value of the ╲
            │ search over the    │────▶│  first search   │
            │ second parameter   │     ╲   parameter    ╱
            │ search range to    │      ╲              ╱
            │ find a minimum     │       ╲────────────╱
            │ value of J(o,w)    │            │ no
            └────────────────────┘            │
                                              ▼
                                        ┌──────────┐
                                        │   End    │
                                        └──────────┘
```

**Figure 8**

Europäisches
Patentamt

European
Patent Office

Office européen
des brevets

**EUROPEAN SEARCH REPORT**

Application Number

EP 09 17 0576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/034854 A1 (LEE TAMMY [KR] ET AL) 5 February 2009 (2009-02-05) <br> * paragraph [0066] * <br> * paragraph [0077] - paragraph [0080] * <br> * paragraph [0082] - paragraph [0084] * <br> * figure 8 * | 1-15 | INV. <br> H04N7/26 |
| Y | ELLINAS J N ET AL: "Stereo video coding based on quad-tree decomposition of B-P frames by motion and disparity interpolation" <br> IEE PROCEEDINGS: VISION, IMAGE AND SIGNAL PROCESSING, INSTITUTION OF ELECTRICAL ENGINEERS, GB, <br> vol. 152, no. 5, <br> 7 October 2005 (2005-10-07), pages 639-647, XP006024995 <br> ISSN: 1350-245X <br> * point 3 "Proposed interpolative scheme for stereoscopic video coding"; page 642 - page 644 * | 1-15 | |
| Y | WO 2008/004940 A1 (ERICSSON TELEFON AB L M [SE]; ANDERSSON KENNETH [SE]; SJOEBERG RICKARD) 10 January 2008 (2008-01-10) <br> * abstract * <br> * page 5, line 25 - line 26 * <br> * page 8, line 24 - line 27 * <br> * page 8, line 30 - line 32 * <br> * figure 12 * | 1-15 | TECHNICAL FIELDS SEARCHED (IPC) <br><br> H04N |

-/--

The present search report has been drawn up for all claims

| Place of search | Date of completion of the search | Examiner |
|---|---|---|
| Munich | 18 January 2010 | Regidor Arenales, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 09 17 0576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SULLIVAN G J ET AL: "Video Compression-From Concepts to the H.264/AVC Standard" PROCEEDINGS OF THE IEEE, IEEE. NEW YORK, US, vol. 93, no. 1, 1 January 2005 (2005-01-01), pages 18-31, XP011123850 ISSN: 0018-9219 * left column, last paragraph before point 5) "Weighted Prediction in P and B Slices"; page 26 * | 1-15 | |
| A | BOYCE J M: "Weighted prediction in the H.264/MPEG AVC video coding standard" CIRCUITS AND SYSTEMS, 2004. ISCAS '04. PROCEEDINGS OF THE 2004 INTERNA TIONAL SYMPOSIUM ON VANCOUVER, BC, CANADA 23-26 MAY 2004, PISCATAWAY, NJ, USA,IEEE, US, 23 May 2004 (2004-05-23), pages III-789, XP010719383 ISBN: 978-0-7803-8251-0 * the whole document * | 1-15 | TECHNICAL FIELDS SEARCHED (IPC) |

The present search report has been drawn up for all claims

| Place of search | Date of completion of the search | Examiner |
|---|---|---|
| Munich | 18 January 2010 | Regidor Arenales, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 17 0576

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2010

| Patent document cited in search report | | Publication date | Patent family member(s) | | Publication date |
|---|---|---|---|---|---|
| US 2009034854 | A1 | 05-02-2009 | WO 2009017301 A1 | | 05-02-2009 |
| | | | KR 20090012926 A | | 04-02-2009 |
| WO 2008004940 | A1 | 10-01-2008 | CA 2655970 A1 | | 10-01-2008 |
| | | | EP 2039171 A1 | | 25-03-2009 |
| | | | US 2009257492 A1 | | 15-10-2009 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060198440 A1
- WO 2007092215 A2